Europäisches Patentamt

European Patent Office

Office européen des brevets

(11) Publication number: **0 219 950**
**A2**

(12) **EUROPEAN PATENT APPLICATION**

(21) Application number: **86306695.7**

(22) Date of filing: **29.08.86**

(51) Int. Cl.⁴: **G 11 B 23/04**

(30) Priority: **30.08.85 JP 131690/85 U**

(43) Date of publication of application:
**29.04.87 Bulletin 87/18**

(84) Designated Contracting States:
**AT CH DE FR GB IT LI NL**

(71) Applicant: **SONY CORPORATION**
**7-35 Kitashinagawa 6-Chome Shinagawa-ku**
**Tokyo 141(JP)**

(71) Applicant: **Hewlett-Packard Company**
**P.O. Box 10301 3000 Hanover Street**
**Palo Alto California 94303-0890(US)**

(72) Inventor: **Ohta, Toshiro c/o Patents Division**
**Sony Corporation 6-7-35 Kitashinagawa**
**Shinagawa-ku Tokyo 141(JP)**

(72) Inventor: **Henze, Richard H.**
**c/o Hewlett Packard Company PO Box 10301**
**Palo Alto California 94303-0890(US)**

(72) Inventor: **McConica, Charles H.**
**c/o Hewlett Packard Company PO Box 10301**
**Palo Alto California 94303-0890(US)**

(72) Inventor: **Clifford, George**
**c/o Hewlett Packard Company PO Box 10301**
**Palo Alto California 94303-0890(US)**

(72) Inventor: **Spenner, Bruce F.**
**c/o Hewlett Packard Company PO Box 10301**
**Palo Alto California 94303-0890(US)**

(74) Representative: **Thomas, Christopher Hugo et al,**
**D Young & Co 10 Staple Inr**
**London WC1V 7RD(GB)**

(54) **Magnetic tape cartridges.**

(57) A magnetic tape cartridge (10 compatible for use with a disc-drive comprises a cartridge casing defining a thin space. A tape run path (62) is defined within the thin space for passing a magnetic tape (12) across a position (36) where a disc-drive head is provided for transferring data between the magnetic tape (12) and the disc-drive head. A back-tension or retarding force is applied to the magnetic tape (12) for preventing the magnetic tape (12) from becoming slack. Preferably, the retarding force is applied to the tape feeding means mechanism and maintains a tension on the magnetic tape (12), so preventing the magnetic tape (12) from overrunning, which would result in the supply of an extra length of the magnetic tape (12) to the tape run path (62), and cause slackening of the magnetic tape (12).

./...

FIG.1

1

## MAGNETIC TAPE CARTRIDGES

This invention relates to magnetic tape cartridges. Embodiments of the invention are particularly, but not exclusively, suitable for use as backup storage media for a computer.

As is well known, magnetic tape has a relatively large data storage capacity. Magnetic tape is especially useful as a storage medium when fast access is not required, such as when used for backup storage. Because of the relatively slow access to the desired data, magnetic tape is less popular than disc-type storage media, such as floppy discs and hard discs, for use as backup storage. Therefore, recent computers generally employ disc-based data storage systems as built-in or external units.

Various disc drives designed for use with associated discs have been proposed and developed. For example, United States patent specification US-A-4 445 155 discloses a typical construction of a microfloppy disc, that is a 3.5-inch (about 89 mm) floppy disc, and a disc-drive therefor. The microfloppy disc is in the form of a floppy disc cassette or cartridge comprising a flexible magnetic disc and a cassette or cartridge casing. The flexible disc includes a centre core disc designed to be chucked on a turntable of the disc-drive. The disc-drive drives the centre core disc and the flexible disc.

Floppy discs are useful for fast access but have limited data storage capacity. Archival or back-up storage of data stored on a hard disc generally takes twenty to eighty floppy discs due to their smaller capacity. This involves substantial expense for the user. On the other hand, magnetic tape can easily accommodate all of the data stored on a hard disc. However, a special tape recording and/or reproducing apparatus has previously been necessary for copying data from the hard disc onto the magnetic tape storage medium. This is an additional expense for the user.

So as to allow the user to utilize magnetic tape for inexpensive backup storage of data on hard discs or floppy discs, it would be beneficial to provide a magnetic tape cartridge compatible with floppy disc drives, so that it may be driven by the same drive unit as floppy discs. For this

2 0219950

purpose, there has been previously proposed a disc-drive-compatible magnetic tape cartridge in United States Patent Application Serial No. 713 162, filed on March 18, 1985. This proposed magnetic tape cartridge can utilize the read/write head or heads of a disc-drive to write data onto and/or read data from the magnetic tape. The magnetic tape cartridge contains a tape media for data storage, a mechanism to register the tape with respect to a location at which data is written onto the tape or is read from the tape by the read/write head or heads of the disc-drive, a mechanism for storing the tape, and a mechanism to feed the tape past the read/write head or heads. The magnetic tape cartridge has a portion having an external shape and size which allows that portion to be inserted into the disc-drive to enable the tape to be placed in the vicinity of the read/write head or heads.

According to the present invention there is provided a magnetic tape cartridge characterized by:

a magnetic tape suitable for storing data in a form which is transferrable between said magnetic tape and a disc-drive head in a disc-drive;

means for registering a portion of said magnetic tape at a location at which data can be transferred between said magnetic tape and said disc-drive head;

means for feeding said magnetic tape past said location;

means for storing said magnetic tape; and

means for providing a predetermined resistance to feeding of said magnetic tape to prevent said magnetic tape from slackening.

According to the present invention there is also provided a magnetic tape cartridge characterized by:

means for defining a tape run path for passing a magnetic tape across a disc-drive head provided in a disc-drive;

means co-operably associable with a drive mechanism of the disc-drive for driving said magnetic tape along said tape run path in at least one direction by a driving force transmitted from said drive mechanism; and

means for producing a retarding force to be applied to said magnetic tape driving means for continuously providing a tension on said magnetic tape.

By providing resistance for the tape feeding means, the overrunning of the magnetic tape which causes the supply of an extra length of magnetic tape in the tape path run can be successfully prevented, so that slackening of the magnetic tape in the tape path run does not occur.

A preferred embodiment of magnetic tape cartridge according to the invention comprises a cartridge casing defining a substantially thin space, a tape run path defined within the thin space for passing a magnetic tape across a position where a disc-drive head can transfer data between the magnetic tape and the disc-drive head, and means for applying a retarding force or back-tension to the magnetic tape to prevent the magnetic tape from slackening.

In practice, the retarding force or back-tension applying means is an active means for feeding the magnetic tape through the tape run path and for preventing the magnetic tape from overrunning so as not to supply an extra length of the magnetic tape to the tape run path, which would cause slackening of the magnetic tape.

In a preferred embodiment, the means for registering the tape comprises means for aligning the tape cartridge with the disc-drive when the tape cartridge is loaded into the disc-drive, and means for guiding the magnetic tape within the tape cartridge such that, when the tape cartridge is aligned with the disc-drive, the magnetic tape is registered with the location where data transfer may occur.

The magnetic tape cartridge may further comprise a protective shell enclosing the magnetic tape, the shell having a bottom portion that includes therein at least one hole located such that, when the tape cartridge is loaded into the disc-drive, the or each of the holes fits over an associated peg in the disc-drive and aligns the tape cartridge with the disc-drive. The tape cartridge includes a first section that is insertable into the disc-drive and wherein the magnetic tape is contained within a substantially planar region. Within the first section are a plurality of twist tape guides, the magnetic tape wrapping about each of the twist tape guides by substantially 180 degrees to change the direction of feed of the magnetic tape and to rotate the normal to the plane of the magnetic tape by substantially 180 degrees so that the magnetic tape feeds through the first section within a disc-like region, so that this first section can have a disc-like shape suitable for insertion into a disc-drive.

The storage means may comprise a first spool and a second spool between which the magnetic tape is wound. The tape feed means may comprise means, in contact with the magnetic tape, for driving the magnetic tape, and a power train for transferring power from a motor to the tape driving means. The power train may include a clutch and means for reversing the direction in which the magnetic tape is fed past the location. In addition, when used with a disc-drive having a motor, the power train transfers power from the disc-drive motor to the tape driving means.

The tape driving means may comprise a first spool and a second spool, the spools being connected by a power train to the motor and responsive to motor rotation to wind the magnetic tape from one spool to the other, the spools also functioning as the means for storing tape.

In a preferred embodiment, the tape feeding means comprises a rotary body for feeding the magnetic tape across the data transfer location, and resistance providing means acts on the rotary body for providing resistance against rotation of the rotary body, and thereby provide resistance against the tape feed. The resistance providing means may comprise a resilient spring exerting a predetermined force on the rotary body for providing resistance against rotation of the rotary body.

The driving means may be associated with a disc-drive motor of the drive mechanism, and comprise a power train transmitting a driving force from the disc-drive motor to the magnetic tape, and the retarding force or back tension means acting on the power train for reacting against the driving force to serve as a resistance.

The magnetic tape cartridge may further comprise means for storing the magnetic tape for supplying magnetic tape from one end of the tape run path and receiving the magnetic tape at the other end of the tape run path, the retarding force or back-tension producing means being active at least during the supply of the magnetic tape from one end of the tape run path to the other. The magnetic tape storing means may comprise first and second tape reels on which the magnetic tape is wound, the first tape reel being located at a supply end of the tape run path and the second tape reel being located at a take-up side end of the tape run path, and the retarding force or back-tension means being active at least on the first reel for providing resistance against rotation of the first reel rotating in the tape supply direction.

The invention will now be described by way of example with reference to the accompanying drawings, throughout which like references refer to the parts, and in which:

Figure 1 is a perspective view of an embodiment of magnetic tape cartridge according to the present invention viewed from above and with a tape access shutter in the closed position;

Figure 2 is a perspective view of the embodiment, but as viewed from below and with the tape access shutter in the open position;

Figure 3 is a plan view of the embodiment, in which a portion of an upper half of the cartridge is removed to show a tape drive mechanism;

Figure 4 is a longitudinal section taken along line IV - IV of Figure 3 of the embodiment showing a tape drive mechanism; and

Figure 5 is a cross-section taken along line V - V of Figure 3 of the embodiment.

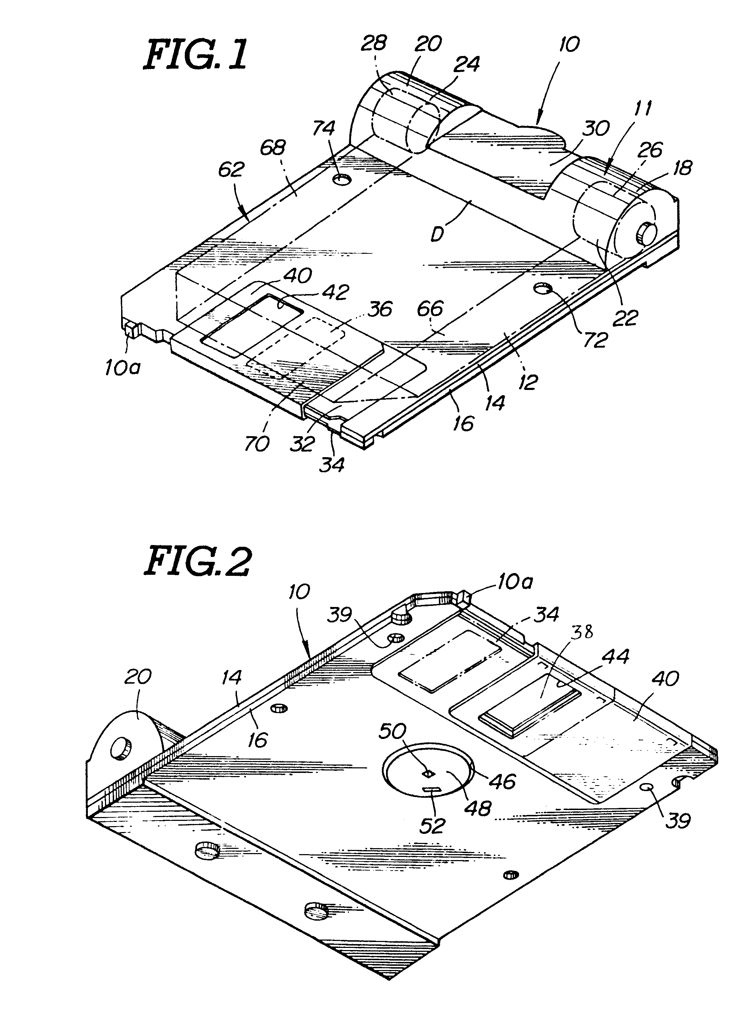

Figures 1 to 3 show a preferred embodiment of magnetic tape cartridge 10 which is compatible with a disc-drive for flopppy discs of corresponding size, such as 3.5-inch (about 19 mm) microfloppy discs of the type disclosed in United States patent specification US-A-4 445 155.

Although the magnetic tape cartridge to be described employs a magnetic tape having two ends respectively wound around supply and take-up reels, the magnetic tape cartridge may alternatively employ an endless-loop-type tape.

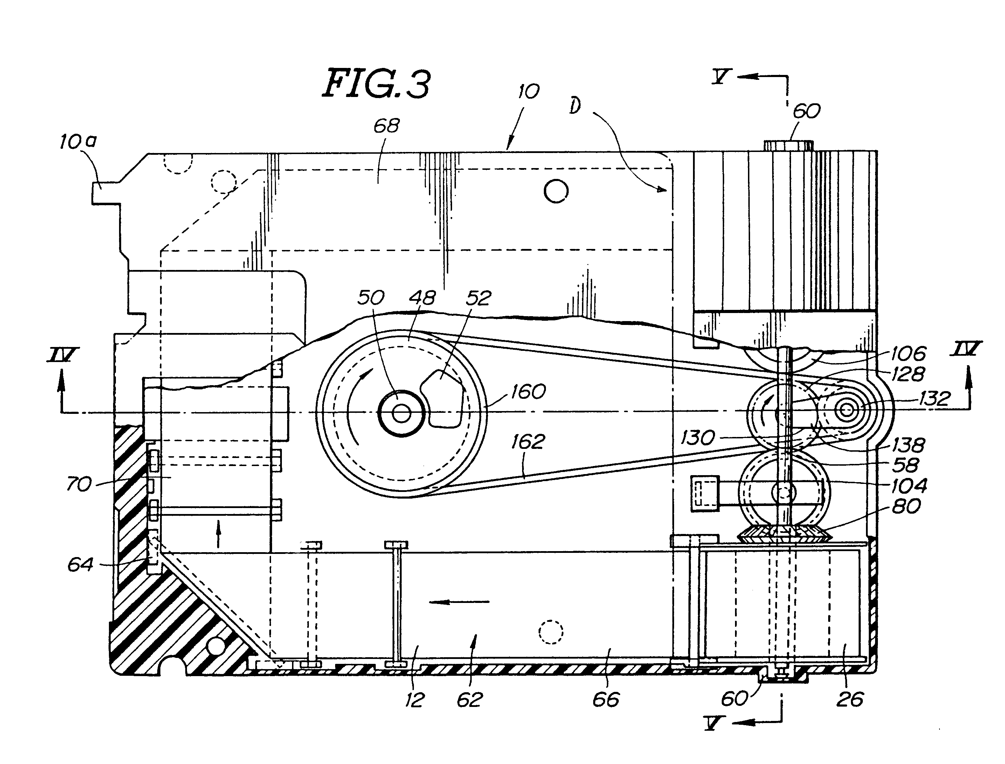

The magnetic tape cartridge 10 has a magnetic tape 12 housed within the interior of the cartridge 10. The cartridge 10 is made up of an upper half 14 and a lower half 16. The upper and lower halves 14 and 16 are of equal size in plan view and are fixed to each other to form the cartridge 10. The cartridge 10 is of substantially the same size and shape as a microfloppy disc cartridge, but is longer than a microfloppy disc cartridge. The length of a microfloppy disc cartridge relative to the length of the cartridge 10 is illustrated by the line D in Figures 1 and 3. As will be appreciated, the cartridge 10 has an extra section 11 which accommodates the tape reels, the tape drive mechanism and so forth. When the cartridge 10 is loaded into a disc-drive for which it is designed, the extra section 11 will remain outside the disc-drive, protruding from the opening of the disc-drive.

As shown in Figures 1 and 2, the cartridge 10 is further formed with a projection 10a projecting from the front end of the cartridge 10. The projection 10a serves as an indicator for allowing the disc-drive to recognize that a magnetic tape cartridge 10 is used.

However, it would be possible to make the magnetic tape cartridge 10 match a microfloppy disc cartridge not only in the width and thickness but also in length, if necessary.

The upper half 14 has semi-cylindrical hollow extensions 18 and 20 near its rear corners and along its rear edge ("rear" when referring to the direction of insertion into the disc-drive). The semi-cylindrical hollow extensions 18 and 20 extend upwards from the upper surface of the upper half 14 and thus define tape reel receptacles 22 and 24 receiving a supply reel 26 and a take-up reel 28. A space 30 for a power train, which will be described in detail later, remains between the tape reel receptacles 22 and 24.

The upper and lower halves 14 and 16 have recesses 32 and 34 exposed to the outside on their upper and lower surfaces respectively. Longitudinally (with respect to the direction of insertion) elongated tape access apertures 36 and 38 are formed in the upper and lower halves 14 and 16 within the recesses 32 and 34. The tape access apertures 36 and 38 are aligned with each other to allow access by a disc-drive head (not shown) of a disc-drive to the magnetic tape 12. The disc-drive can be the same as or similar to that disclosed in United States patent specification US-A-4 445 155.

The upper and lower halves 14 and 16 also have positioning holes 39 for positioning the cartridge 10 within the disc-drive. The positioning holes 39 of the upper and lower halves 14 and 16 are aligned with each other and are designed to receive a positioning pin (not shown) built into the disc-drive.

A sliding shutter 40 slidingly engages the recesses 32 and 34. Upper and lower surfaces of the sliding shuttter 40 lie substantially flush with the upper and lower surfaces of the cartridge 10 as assembled. The sliding shutter 40 has longitudinally elongated apertures 42 and 44 of the same size and configuration as the tape access apertures 36 and 38 of the cartridge 10. The sliding shutter 40 is moveable between a closed position (as shown in Figure 1), in which the apertures 42 and 44 are offset from the tape access apertures 36 and 38 and thus hiding the magnetic tape 12, and an open position (as shown in Figure 2), in which the apertures 42 and 44 are aligned with the tape access apertures 36 and 38 to allow the disc-drive head access to the magnetic tape 12. The sliding shutter 40 is normally biased by resilient biasing means such as a spring (not shown) towards the closed position, and is moved to the open position when the cartridge 10 is inserted into the disc drive.

The lower half 16 also has a central aperture 46. A centre core disc 48 is rotatably mounted on a boss 47 extending from the lower surface of the upper half 14 through a bearing 49, such as an oil-less metal bearing, as shown in Figure 3. The centre core disc 48 is aligned with the centre aperture 46 in the lower half 16, and is thus exposed through the centre aperture 46 of the lower half. The centre core disc 48 has a centre positioning aperture 50 and a driving and positioning aperture 52. The driving and positioning aperture 52 is offset by a given distance from the centre positioning aperture 50. The centre positioning aperture 50 is designed to engage a disc-drive motor spindle 54. The driving and positioning aperture 52 is designed to engage a driving pin mounted on a turntable (not shown) which is driven by the motor spindle 54. Therefore, the centre core disc 48 is driven by the driving force transmitted through the turntable of the disc-drive.

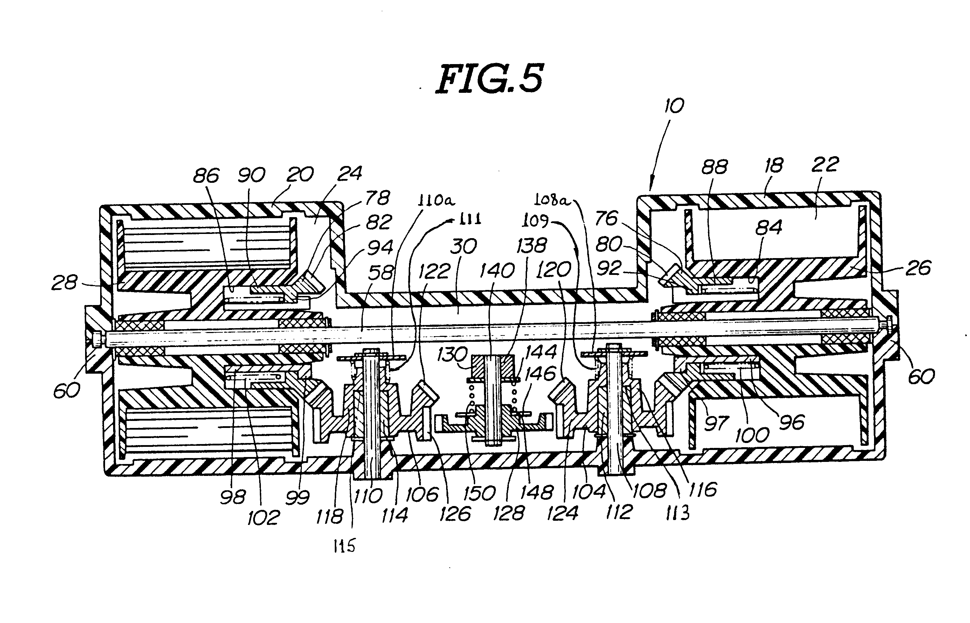

The supply and take-up reels 26 and 28 are rotatably supported by a support shaft 58, the ends of which are fixed to boss sections 60 formed on the side walls of the semi-cylindrical extensions 18 and 20 as shown in Figure 5. The supply and take-up reels 26 and 28 are mounted within the tape reel receptacles 22 and 24 with their axes in a transverse plane to the direction of insertion into the disc drive. A tape run path 62 is defined within the thin space defined in the front portion of the cartridge 10 along which the magnetic tape 12 passes between the tape access apertures 36 and 38. Tape guides 64 define the tape run path 62. As will be seen from Figures 1 and 3, the tape run path 62 has a first section 66 near the supply reel 26 and extending longitudinally along one edge of the cartridge 10, a second section 68 near the take-up reel 28 and extending longitudinally along the other edge of the cartridge 10, and a third section 70 extending laterally across the front edge and between the tape access apertures 36 and 38. At the junctions of the first section 66 and the third section 70, and of the second section 68 and the third section 70, the tape guides 64 are provided to deflect the magnetic tape 12.

In this disclosure, the word "longitudinal" used in connection with the tape path means the axis of movement along the first and second sections 66 and 68 of the tape run path 62, and the word "lateral" used in connection with the tape path means the axis of movement along the third section 70 of the tape run path 62.

The tape guide 64 is so configured as to turn the magnetic tape 12 through a right angle, that is from longitudinal to lateral and from lateral to longitudinal. For this purpose, the magnetic tape 12 wraps around the tape guide 64 while twisting through 180 degrees.

The upper and lower halves 14 and 16 have circular openings 72 and 74 opposing the first and second sections 66 and 68 of the tape run path 62. Through the openings 72 and 74, the tape run path 62 can be monitored to detect the presence or absence of the magnetic tape 12. Suitable tape monitoring mechanisms are known per se in tape recording and/or reproducing apparatus.

In order selectively to drive the supply reel 26 and the take-up reel 28 for recording and/or reproduction in forward and reverse directions, the cartridge 10 is provided with a specially designed tape drive mechanism. In general, the take-up reel 28 is driven to extract the magnetic tape 12 from the supply reel 26 through the tape run path 62 during recording and reproduction. This tape direction will be hereafter referred to as "forward". The supply reel 26 must be driven to extract the magnetic tape 12 from the take-up reel 28 during rewinding. The supply reel 26 drives the magnetic tape 12 through the tape run path 62 in the direction opposite to the forward direction which will hereafter be referred to as "reverse".

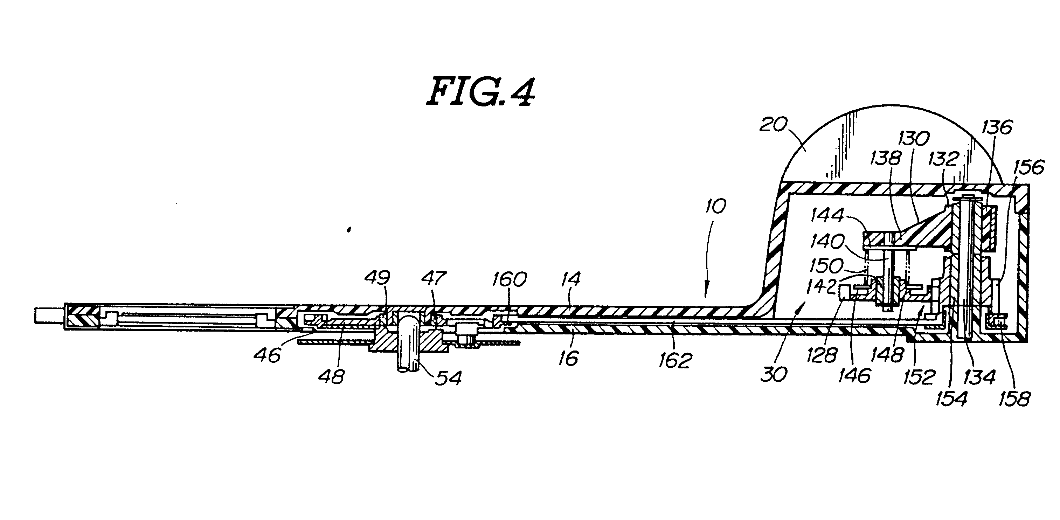

The tape drive mechanism includes a pair of bevel gear blocks 76 and 78 as shown in Figures 4 and 5. The bevel gear blocks 76 and 78 are generally cylindrical and have bevel gears 80 and 82 respectively at one end thereof. The bevel gear blocks 76 and 78 are co-axially mounted on the mutually opposing axial ends of the supply reel 26 and the take-up reel 28. In practice, as shown in Figure 5, the supply reel 26 and the take-up reel 28 are formed with annular grooves 84 and 86. The cylindrical sections 88 and 90 of the bevel gear blocks 76 and 78 are inserted into the annular grooves 84 and 86 of the supply reel 26 and the take-up reel 28. Annular projections 92 and 94 are formed on the inner periphery of the cylindrical sections 88 and 90 of the bevel gear blocks 76 and 78. Cylindrical retainers 96 and 98 with flanges 97 and 99 are fitted into the annular grooves 84 and 86 so as to retain the cylindrical sections 88 and 90 of the bevel gear blocks 76 and 78 within the annular grooves 84 and 86. Compression coil springs 100 and 102 are also disposed within the annular grooves 84 and 86. One end of each of the springs 100 and 102 seats on the bottom of the annular grooves 84 and 86, and the other end thereof seats on the annular projections 92 and 94 of the cylindrical sections 88 and 90 in order to bias the bevel gear blocks 76 and 78 against the flanges 97 and 99 of the retainers 96 and 98.

The bevel gear blocks 76 and 78 are rotatable with the supply reel 26 and the take-up reel 28. If necessary, the bevel gear blocks 76 and 78 are keyed to the inner periphery of the annular grooves 84 and 86 with suitable keying means so as to ensure rotation with the associated supply reel 26 and take-up reel 28.

A pair of intermediate gear blocks 104 and 106 are rotatably supported by gear shafts 108 and 110 extending vertically from the floor of the cartridge 10. Bearings 112 and 114 are disposed between the gear shafts 108 and 110 and cylindrical sections 116 and 118 of the intermediate gear blocks 104 and 106. The gear shafts 108 and 110 are arranged in lateral alignment at a given distance from each other. The distance between the gear shafts 108 and 110 is slightly greater than or approximately equal to twice the outer diameter of the intermediate gear blocks 104 and 106. The intermediate gear blocks 104 and 106 have bevel gears 120 and 122 respectively at their upper ends. Respective bevel gears 120 and 122 continuously engage the corresponding bevel gears 80 and 82.

The intermediate gear blocks 104 and 106 also have plane gears 124 and 126 below the bevel gears 120 and 122. The plane gears 124 and 126 lie in the same horizontal plane at a given distance from each other. As set forth above, since the gear shafts 108 and 110 are separated by a distance slightly greater than or approximately equal to the outer diameter of the intermediate gear blocks 104 and 106, the distance between the plane gears 124 and 126 is slightly greater than the outer diameter thereof.

As shown in Figure 5, annular discs 108a and 110a are fixedly mounted at the top of the gear shafts 108 and 110. Coil springs 109 and 111 are wound around the gear shafts 108 and 110. The upper ends of the coil springs 109 and 111 are seated on respective corresponding annular discs 108a and 110a. On the other hand, the lower ends of the coils springs 109 and 111 are seated on the upper section of the intermediate gear blocks 104 and 106. The coil springs 109 and 111 comprise compression springs for biasing the intermediate gear blocks 104 and 106 downwardly. With the biasing force of the coil springs 109 and 111, the intermediate gear blocks 104 and 106 are resiliently in contact with the tops of boss sections 113 and 115, to which the gear shafts 108 and 110 engage with a frictional force resisting rotation thereof. Therefore, the intermediate gear blocks 104 and 106 are constantly providing resistance against rotation.

A two-way coupling gear 128 is disposed between the plane gears 124 and 126. The two-way coupling gear 128 is mounted on a pivotal base 130. The pivotal base 130 has a cylindrical base section 132 pivotably mounted at the top of a pivot shaft 134 extending vertically from the floor of the cartridge 10. A sleeve bearing 136 is interposed between the inner periphery of the cylindrical base section 132 and the outer periphery of the pivot shaft 134 to allow pivotal movement of the pivotal base 130. The pivotal base 130 also has a pivoting arm 138. A gear shaft 140 extends downward from the pivoting arm 138. Adjacent to its lower end, the gear shaft 140 mounts the two-way coupling gear 128. The two-way coupling gear 128 is rotatable about the gear shaft 140. A sleeve bearing 142 is disposed between the contacting faces of the gear shaft 140 and the two-way coupling gear 128.

An annular slip plate 144 loosely engages the gear shaft 140 of the two-way coupling gear 128. Also, an annular disc-shaped spring seat 146 engages the stepped outer periphery 148 of the two-way coupling gear 128. A compression coil spring 150 is disposed between the slip plate 144 and the spring seat 146 to exert a biasing spring force on the slip plate 144 for frictional engagement with the lower surface of the pivoting arm 138. At the same time, the spring force of the compression coil spring 150 is exerted on the two-way coupling gear 128 through the spring seat 146. The slip plate 144 and the coil spring 150 constitute a clutch mechanism which causes the pivotal base 130 to pivot so as to bring the two-way coupling gear 128 into engagement with one of the plane gears 124 and 126 of the intermediate gear blocks 104 and 106, depending on the direction of rotation of the two-way gear 128.

A drive gear block 152 is mounted at the lower end of the pivot shaft 134 through a sleeve bearing 154. The drive gear block 152 has a drive gear 156 continuously engaging the two-way coupling gear 128. The drive gear block 152 also has a pulley 158 integrally formed with the drive gear 156.

The pulley 158 is connected to a second pulley 160 integral with the centre core disc 48 by means of a driving belt 162.

It should be appreciated that the gear ratio of the tape drive mechanism is selected so as to drive the magnetic tape 12 at a speed equal to the rotation speed of a floppy disc on the same disc drive. Specifically, the magnetic tape speed at the third section 70 of the tape run path 62 has to be equal to the rotation speed of the floppy disc, so that the disc-drive can use the same recording and reproduction operations without adjustment.

For this purpose, speaking of a conventional 3.5-inch (about 89 mm) floppy disc, it rotates at about 600 r.p.m. so as to be free of peak-shift errors and data drop-out. Therefore, if it is assumed that the linear velocity of the outermost track is $v_1$ and that of the innermost track is $v_2$, it is preferred that the feed rate v of the magnetic tape 12 be $v_2 < v < v_1$.

In order to drive the magnetic tape 12 forward (from the supply reel 26 onto the take-up reel 28), the turntable is driven clockwise in Figure 3. If the turntable is driven in a clockwise direction, the centre core disc 48 is also driven clockwise. The clockwise rotational force is transmitted from the second pulley 160 of the centre core disc 48 to the pulley 158 of the drive gear block 152 through the drive belt 162. Therefore, the drive gear 156 is driven clockwise as shown in Figure 3.

As long as the two-way coupling gear 128 remains free of the plane gears 124 and 126 of the intermediate gear blocks 104 and 106, the slip plate 144 maintains frictional engagement with the mating surface of the pivoting arm 138 of the pivotal base 130 due to the biasing force of the coil spring 150. Therefore, the rotational force transmitted by the drive gear 156 of the drive gear block 152 to the two-way coupling gear 128 serves to drive the pivotal base 130 clockwise.

Once the two-way coupling gear 128 comes into engagement with the plane gear 126 of the intermediate gear block 106, pivotal movement of the pivotal base 130 is restricted. Then the rotational driving force transmitted by the drive gear 156 to the two-way coupling gear 128 overcomes the spring force of the coil spring 150 and so causes slip between the mating surfaces of the slip plate 144 and the pivoting arm 138. As a result, the two-way coupling gear 128 starts to rotate counter-clockwise, thereby driving the plane gear 126 of the intermediate gear block 106 clockwise. The bevel gear 122 of the intermediate gear block 106 thus rotates clockwise, which causes the bevel gear 76 to drive the take-up reel 28 to wind in the magnetic tape 12.

When the magnetic tape cartridge 10 is unloaded and released from the disc-drive, or the turntable of the disc-drive is forcibly stopped, the coil springs 109 and 110 serve to restrict the rotation of the intermediate gear blocks 104 and 106. Since the bevel gears 120 and 122 of the intermediate gear blocks 104 and 106 are constantly engaged with the bevel gears 80 and 82, rotation of the supply reel 26 and the take-up reel 28 is also restricted by means of the coil springs 109 and 111. Therefore, even when the turntable of the disc-drive is stopped abruptly, slackening of the magnetic tape 12 due to overrunning of the tape reel 26 does not occur.

In order to switch from forward to reverse, the direction of rotation of the turntable is switched from clockwise to counter-clockwise as viewed in Figure 3. In counter-clockwise rotation of the turntable, the centre core disc 48 is driven counter-clockwise. The counter-clockwise rotational force is transmitted from the second pulley 160 of the centre core disc 48 to the pulley 158 of the drive gear block 152 through the drive belt 162. Therefore, the drive gear 156 is driven counter-clockwise in Figure 3.

As long as the two-way coupling gear 128 remains free of the plane gear 124 of the intermediate gear block 104, the slip plate 144 maintains frictional engagement with the mating surface of the pivoting arm 138 of the pivotal base 130 due to the biasing force of the coil spring 150 as the two-way coupling gear 128 becomes free from the clockwise rotational force of the drive gear 156. Therefore, the counter-clockwise rotational force transmitted by the drive gear 156 of the drive gear block 152 to the two-way coupling gear 128 serves as a driving force for the pivotal base 130, causing the pivotal base 130 to pivot counter-clockwise as shown in Figure 3.

Once the two-way coupling gear 128 comes into engagement with the plane gear 124 of the intermediate gear block 104, pivotal movement of the pivotal base 130 is restricted. Then, the rotational driving force transmitted by the gear 156 to the two-way coupling gear 128 overcomes the biasing force of the coil spring 150, causing slip between the mating surfaces of the slip plate 144 and the pivoting arm 138. As a result, the two-way coupling gear 128 starts to rotate clockwise, thus driving the plane gear 124 of the intermediate gear block 104 counter-clockwise. The bevel gear 120 of the intermediate gear block 104 is thus rotated clockwise, causing the bevel gear 74 to drive the supply reel 26 to rewind the magnetic tape 12.

In the embodiment, magnetic tape 12 $\frac{3}{4}$-inch wide (about 19 mm) is employed in the cartridge 10. In this case, eighty recording tracks can be formed, which corresponds to the number that can be formed on a 3.5-inch (about 89 mm) floppy disc. Each track formed on the magnetic tape 12 extends longitudinally along the magnetic tape 12. It will be appreciated that the length of each track depends solely on the length of the magnetic tape 12 and so can be longer than the length of the recording tracks formed on 3.5-inch (about 89 mm) floppy discs. In general, the capacity of each track on the magnetic tape 12 will be several tens of times greater than that of a track on a floppy disc. If the magnetic tape 12 is 12 m long, the capacity of the cartridge 10 will be approximately 20 megabytes.

It will be appreciated that the magnetic tape 12 employed in the cartridge 10 can be tracked by means of conventional tracking mechanisms employed in conventional disc-drives.

As will be appreciated, embodiments of magnetic tape cartridge according to the present invention can provide a very large data storage capacity. Therefore, such cartridges are suitable for use as backup storage for hard-discs or floppy discs. Furthermore, they can be utilized in a filing system which requires high-capacity memory media.

It should be appreciated that the retarding force or back-tension for preventing the magnetic tape from overrunning to cause slackening is not necessarily exerted on the intermediate gears. For example, it would be possible to provide a retarding force or back-tension directly on the supply reel and take-up reel which would achieve the same effect as in the described embodiment.

## CLAIMS

1. A magnetic tape cartridge (10), characterized by:

a magnetic tape (12) suitable for storing data in a form which is transferrable between said magnetic tape (12) and a disc-drive head in a disc-drive;

means (64) for registering a portion of said magnetic tape (12) at a location (36, 38) at which data can be transferred between said magnetic tape (12) and said disc-drive head;

means for feeding said magnetic tape (12) past said location (36, 38);

means (26, 28) for storing said magnetic tape (12); and

means for providing a predetermined resistance to feeding of said magnetic tape (12) to prevent said magnetic tape (12) from slackening.

2. A magnetic tape cartridge (10) according to claim 1 wherein said means (64) for registering comprises:

means (10a) for aligning said magnetic tape cartridge (10) with said disc-drive when said magnetic tape cartridge (10) is loaded into said disc-drive; and

means (64) for guiding said magnetic tape (12) within said magnetic tape cartridge (10) such that, when said magnetic tape cartridge (10) is aligned with said disc-drive, said magnetic tape (12) is registered with said location (36, 38).

3. A magnetic tape cartridge (10) according to claim 2 which further comprises a protective shell (14, 16) enclosing said magnetic tape (12), said protective shell (14, 16) having a bottom portion (16) that includes therein at least one hole (39) located such that, when said magnetic tape cartridge (10) is loaded into said disc-drive, the or each of the said holes (39) fits over an associated peg in said disc-drive and aligns said magnetic tape cartridge (10) with said disc-drive.

4. A magnetic tape cartridge (10) according to claim 2 wherein said magnetic tape cartridge (10) includes a first section that is insertable into said disc-drive, and wherein within said first section, said magnetic tape (12) is contained within a substantially planar region.

5. A magnetic tape cartridge (10) according to claim 4 wherein within said first section is provided tape guide means comprising a plurality of twist tape guides (64), said magnetic tape (12) wrapping about each of said twist tape guides (64) by substantially 180 degrees to change the direction of feed of said magnetic tape (12) and to rotate a normal to the plane of said magnetic tape (12) by substantially 180 degrees so that said magnetic tape (12) feeds through said first section within a disc-like region, whereby said first section can have a disc-like shape suitable for insertion into a disc-drive.

6. A magnetic tape cartridge (10) according to claim 1 wherein said storage means (26, 28) comprises a first spool (26) and a second spool (28) between which said magnetic tape (12) is wound.

7. A magnetic tape cartridge (10) according to claim 1 wherein the means for feeding said magnetic tape (12) comprises means (28, 78, 106, 128) in contact with said magnetic tape (12), for driving said magnetic tape (12), and a power train (128, 160, 162) for transferring power from a motor to said means (28, 78, 106, 128) for driving said magnetic tape (12).

8. A magnetic tape cartridge (10) according to claim 7 wherein said power train (128, 160, 162) includes a clutch mechanism (144, 150) for reversing the direction in which said magnetic tape (12) is fed past said location (36, 38).

9. A magnetic tape cartridge (10) according to claim 7 in combination with a disc-drive having a motor, said power train (128, 160, 162) transferring power from said disc-drive motor to said means (28, 78, 106, 128) for driving said magnetic tape (12).

10. A magnetic tape cartridge (10) according to claim 9 wherein said means (28, 78, 106, 128) for driving said magnetic tape (12) comprises a first spool (26) and a second spool (28), said spools (26 and 28) being capable of being coupled by said power train (128, 160, 162) to said disc-drive motor and responsive to motor rotation to wind said magnetic tape (12) from one spool (26, 28) to the other, said spools (26 and 28) also functioning as said means (26, 28) for storing said magnetic tape (12).

11. A magnetic tape cartridge (10) according to claim 1 wherein said magnetic tape feeding means comprises a rotary body (26, 28, 76, 78, 104, 106) for feeding said magnetic tape (12) across said location (36, 38), and said resistance providing means (109, 111) acts on said rotary body (26, 28, 76, 78, 104, 106) resisting the rotation of said rotary body (26, 28, 76, 78, 104, 106) for providing resistance to tape feed.

12. A magnetic tape cartridge (10) according to claim 11 wherein said resistance providing means (109, 111) comprises a resilient spring (109, 111) exerting a predetermined biasing force on said rotary body (26, 28, 76, 78, 104, 106) for providing resistance against rotation of said rotary body (26, 28, 76, 78, 104, 106).

13. A magnetic tape cartridge (10) characterized by:
means (64) for defining a tape run path (62) for passing a magnetic tape (12) across a disc-drive head provided in a disc-drive;
means (78, 106, 128, 160, 162) co-operably associable with a drive mechanism of the disc-drive for driving said magnetic tape (12) along said tape run path (62) in at least one direction by a driving force transmitted from said drive mechanism; and
means (104, 108a, 109) for producing a retarding force to be applied to said magnetic tape driving means for continuously providing a tension on said magnetic tape (12).

14. A magnetic tape cartridge (10) according to claim 13 wherein said magnetic tape driving means (78, 106, 128, 160, 162) is associable with a disc-drive motor of said disc-drive mechanism and comprises a power train (128, 160, 162) for transmitting a driving force of said disc-drive motor for driving said magnetic tape (12), and said retarding force producing means (104, 108a, 109) acts on said power train (128, 160, 162) for reacting against said driving force to exert a tension on said magnetic tape (12).

15. A magnetic tape cartridge (10) according to claim 13 further comprising means (26) for storing said magnetic tape (12), for forming one end of said tape run path (62), and for receiving said magnetic tape (12) at the other end of said tape run path (62), said retarding force producing means (104, 108a, 109) acting at least on the supply of said magnetic tape (12) from said one end of said tape run path (62).

16. A magnetic tape cartridge (10) according to claim 13 further comprising first and second tape reels (26, 28) on which said magnetic tape (12) is wound, said first tape reel (26) being located at a supply end of said tape run path (62) and said second tape reel (28) being located at a take-up end of said tape run path (62), said retarding force producing means (104, 108a, 109) acting at least on said first reel (26) for providing resistance against rotation of said first reel (26) in the magnetic tape supply direction.

*FIG.1*

*FIG.2*

FIG.3

FIG.4

FIG.5